# EUROPEAN PATENT APPLICATION

(11) **EP 4 768 538 A1**
(43) Date of publication of application: **01.07.2026**
(21) Application number: 24856426.2
(22) Date of filing: 19.08.2024
(51) Int. Cl.: C08L 33/06, C08F 8/48, C08F 220/14, C08K 5/098, C08K 5/3475

(54) **RESIN COMPOSITION, MOLDED BODY, COMPONENT FOR OPTICAL APPLICATIONS, AND COMPONENT FOR VEHICLES**

(30) Priority: 24.08.2023 JP 2023136439
(71) Applicant: Mitsubishi Chemical Corporation, Tokyo 100-8251 (JP)
(72) Inventor: IMAOKA, Shoutaro, Tokyo 100-8251 (JP)
(74) Representative: Ter Meer Steinmeister & Partner
(86) International application number: PCT/JP2024/029317
(87) International publication number: WO 2025/041738

(57) **Abstract**

A resin composition containing a copolymer (A) containing a repeating unit (A1) derived from a (meth)acrylic acid ester and a repeating unit (A2) derived from (meth)acrylic acid, a fatty acid metal salt, and a benzotriazole-based ultraviolet absorber.

## Description

### Technical Field

The present invention relates to a resin composition, a molded body, a component for optical applications, and a component for vehicles.

### Background Art

Polymethyl methacrylate is widely used in various fields such as optical materials, components for vehicles, lighting materials, and building materials because of its excellent transparency and weather resistance. In recent years, components for optical applications and components for vehicles using polymethyl methacrylate have been increasingly diversified in design, and more complicated shapes tend to be preferred. Thus, better moldability is required for polymethyl methacrylate used for the components. However, polymethyl methacrylate has relatively strong adhesion to metal and is brittle, and thus, there is a problem that mold release failure such as cracking or peeling of a molded article is likely to occur at the time of mold release from a mold in injection molding of a molded article having a complicated shape in particular.

To solve this problem, an attempt has been made to improve the releasability by adding a lubricant as a release agent to polymethyl methacrylate. For example, a method of adding a fatty acid metal salt as a lubricant (Patent Literature 1) is known.

### Citation List

### Patent Literature

Patent Literature 1: JP S61-73754 A

### Summary of Invention

### Technical Problem

However, it has been confirmed that when a fatty acid metal salt is added to a normal polymethyl methacrylate, the fatty acid metal salt reacts with other additives contained in the polymethyl methacrylate, decomposition products thereof, and the like, thereby causing yellowing of the resulting molded body. It has also been confirmed that poor dispersibility of the fatty acid metal salt with respect to polymethyl methacrylate causes cloudiness in the resulting molded body. Moreover, it has been confirmed that this problem becomes more remarkable when an ultraviolet absorber such as a benzotriazole-based ultraviolet absorber is contained in the resin composition. Because of these problems, it has been difficult to produce a molded body having good color tone and transparency from polymethyl methacrylate containing a fatty acid metal salt and further a benzotriazole-based ultraviolet absorber.

Thus, an object of the present invention is to provide a resin composition in which yellowing and cloudiness that occur when a fatty acid metal salt and a benzotriazole-based ultraviolet absorber are added are suppressed, the resin composition exhibiting excellent color tone and transparency, and a molded body of the resin composition.

### Solution to Problem

The present inventor has extensively conducted studies for solving the above-described problems, and resultantly found that the presence of a repeating unit (A2) derived from (meth)acrylic acid in a resin composition makes it possible to suppress yellowing and cloudiness caused by a fatty acid metal salt, and even when a fatty acid metal salt and a benzotriazole-based ultraviolet absorber are added, excellent color tone and transparency are achieved.

The present invention has been achieved based on such findings, and the gist thereof is as follows.

[1] A resin composition containing:
   a copolymer (A) containing a repeating unit (A1) derived from a (meth)acrylic acid ester and a repeating unit (A2) derived from (meth)acrylic acid;
   a fatty acid metal salt; and
   a benzotriazole-based ultraviolet absorber.
[2] The resin composition according to [1], wherein in all repeating units constituting the copolymer (A), the repeating unit (A1) derived from a (meth)acrylic acid ester is contained in an amount of from 80.0 mol% to 99.0 mol%, and the repeating unit (A2) derived from (meth)acrylic acid is contained in an amount of from 1.0 mol% to 20.0 mol%.
[3] The resin composition according to [1] or [2], wherein the copolymer (A) further contains a unit (A3) having a ring structure in a main chain.
[4] The resin composition according to [3], wherein the ring structure contains at least one selected from glutaric anhydride, maleic anhydride, glutarimide, a lactone ring, and N-substituted maleimide.
[5] The resin composition according to [4], wherein the ring structure contains glutaric anhydride.
[6] The resin composition according to any of [3] to [5], wherein in all repeating units constituting the copolymer (A), the repeating unit (A1) derived from a (meth)acrylic acid ester is contained in an amount of from 80.0 mol% to 98.999 mol%, the repeating unit (A2) derived from (meth)acrylic acid is contained in an amount of from 1.0 mol% to 15.0 mol%, and the structural unit (A3) derived from a ring structure is contained in an amount of from 0.001 mol% to 5.0 mol%.
[7] The resin composition according to any of [1] to [6], wherein a metal of the fatty acid metal salt is a monovalent to trivalent metal.
[8] The resin composition according to [7], wherein the metal of the fatty acid metal salt is one or two or more selected from the group consisting of Li, Na, Mg, Ca, Ba, K, and Al.
[9] The resin composition according to [8], wherein the metal of the fatty acid metal salt is Ca or Mg.
[10] The resin composition according to any of [1] to [9], wherein a fatty acid of the fatty acid metal salt is one or two or more selected from the group consisting of a saturated fatty acid having from 8 to 22 carbons and an unsaturated fatty acid having from 8 to 22 carbons.
[11] The resin composition according to any of [1] to [10], further containing a fatty acid.
[12] The resin composition according to [11], wherein the fatty acid is one or two or more selected from the group consisting of a saturated fatty acid having from 8 to 22 carbons and an unsaturated fatty acid having from 8 to 22 carbons.
[13] The resin composition according to [12], wherein the fatty acid is one or two or more selected from the group consisting of palmitic acid, stearic acid, myristic acid, lauric acid, and montanic acid.
[14] The resin composition according to [13], wherein the fatty acid is palmitic acid.
[15] The resin composition according to any of [1] to [14], wherein a content of the fatty acid metal salt is from 0.01 parts by mass to 0.5 parts by mass per 100 parts by mass of the copolymer (A).
[16] The resin composition according to any of [11] to [15], wherein a content of the fatty acid contained in the resin composition is from 0.01 parts by mass to 1.0 part by mass per 100 parts by mass of the copolymer (A).
[17] The resin composition according to any of [1] to [16], wherein the benzotriazole-based ultraviolet absorber is one or two or more selected from the group consisting of 2-(2'-hydroxy-5'-methylphenyl)benzotriazole, 2-[2-hydroxy-3,5-bis(α,α-dimethylbenzyl)phenyl]-2H-benzotriazole, 2-(2'-hydroxy-3'-t-butyl-5'-methylphenyl)-5-chlorobenzotriazole, 2-(2H-benzotriazol-2-yl)-4-methylphenol, 6-di-t-pentylphenol, and 2-(2'-hydroxy-5'-t-octylphenyl)benzotriazole.
[18] The resin composition according to [17], wherein the benzotriazole-based ultraviolet absorber is 2-(2H-benzotriazol-2-yl)-4-methylphenol.
[19] The resin composition according to any of [1] to [18], wherein a content of the benzotriazole-based ultraviolet absorber is from 0.001 parts by mass to 0.3 parts by mass per 100 parts by mass of a total mass of the resin composition.
[20] A resin molded body produced by molding the resin composition described in any of [1] to [19].
[21] A component for an optical application, the component being produced by molding the resin composition described in any of [1] to [19].
[22] A component for a vehicle, the component being produced by molding the resin composition described in any of [1] to [19].

### Advantageous Effects of Invention

The present invention can provide a resin composition containing a fatty acid metal salt for improving releasability and a benzotriazole-based ultraviolet absorber for improving weather resistance, the resin composition exhibiting excellent color tone and transparency, and a molded body of the resin composition.

### Description of Embodiments

Hereinafter, embodiments of the present invention will be described in detail, but the present invention is not limited to the following embodiments, and various modifications can be made within the scope of the gist of the present invention.

In the present specification, "(meth)acrylate" means at least one selected from "acrylate" and "methacrylate", "(meth)acrylic acid" means at least one selected from "acrylic acid" and "methacrylic acid", and "methacrylic-based resin" means at least one selected from "acrylic resin" and "methacrylic resin".

In the present invention, "monomer" means an unpolymerized compound, and "repeating unit" means a unit derived from the monomer formed through polymerization of the monomer. The repeating unit may be a unit directly formed through a polymerization reaction, or may be a unit in which a part of the unit is converted into another structure by treating a polymer.

In the present specification, "resulting resin molded body" means a molded body produced by molding the resin composition of the present invention.

Hereinafter, the present invention will be described in detail.

### Mechanism

According to the present invention, the mechanism by which yellowing and cloudiness caused by a fatty acid metal salt can be suppressed and excellent color tone and transparency can be imparted by containing a repeating unit (A2) derived from (meth)acrylic acid in a resin composition is considered as follows.

Contained substances such as other additives described below and a decomposition product thereof are added to normal polymethyl methacrylate, and a dispersant and a decomposition product thereof are also included in the production process of the polymethyl methacrylate. When a fatty acid metal salt is used in combination with such polymethyl methacrylate, the molded body may be colored because of an acid-base reaction or a complex formation reaction between the contained substances of the polymethyl methacrylate or decomposition product thereof and the fatty acid metal salt at the molding temperature. This coloring is particularly remarkable when a fatty acid metal salt is used in combination with an ultraviolet absorber such as a benzotriazole-based ultraviolet absorber for improving weather resistance, and the fatty acid metal salt induces a structural change of the ultraviolet absorber, thereby causing strong yellowing. Since the compatibility of the fatty acid metal salt with respect to the polymethyl methacrylate is not sufficient, the fatty acid metal salt aggregates in the resin and scatters light, and thus, cloudiness also occurs in the molded body. It is considered that these cause deterioration of the color tone and transparency of the resin composition and the resin molded body of the resin composition.

In contrast to this, it is presumed that, when a copolymer (A) containing a repeating unit (A2) derived from (meth)acrylic acid is used in the resin composition, the carboxylic acid group in the repeating unit (A2) derived from the (meth)acrylic acid interacts with the fatty acid metal salt, thereby suppressing the reaction between the fatty acid metal salt and the contained substances or decomposition product of the benzotriazole-based ultraviolet absorber, other additives, or the like, and making coloring difficult to occur. In addition, it is presumed that the carboxylic acid group in the repeating unit (A2) derived from (meth)acrylic acid improves the affinity between the polymer chain and the fatty acid metal salt, thereby improving the dispersibility of the fatty acid metal salt and suppressing the cloudiness of the resin molded body. It is considered that, because of these effects, the resulting resin composition and the resin molded body produced by molding the resin composition exhibit excellent color tone and transparency even when the resin composition contains a fatty acid metal salt and a benzotriazole-based ultraviolet absorber.

### Resin Composition

The resin composition of the present invention is a resin composition containing a copolymer (A) described below, a fatty acid metal salt described below, and a benzotriazole-based ultraviolet absorber.

The resin composition of the present invention has excellent color tone and transparency while containing a fatty acid metal salt and a benzotriazole-based ultraviolet absorber.

### Copolymer (A)

The copolymer (A) in the resin composition of the present invention (hereinafter, the copolymer may be referred to as "copolymer (A) of the present invention") contains a repeating unit (A1) derived from a (meth)acrylic acid ester (hereinafter abbreviated as "(meth)acrylic acid ester unit (A1)" or "unit (A1)") and a repeating unit (A2) derived from (meth)acrylic acid (hereinafter abbreviated as "(meth)acrylic acid unit (A2)" or "unit (A2)") in the main chain.

The lower limit value of the content of the (meth)acrylic acid ester unit (A1) in the copolymer (A) of the present invention is not particularly limited, but is preferably 80.0 mol%, more preferably 90.0 mol%, still more preferably 94.0 mol% relative to the total number of moles of the repeating units contained in the copolymer (A) from the viewpoint that the resulting resin molded body does not impair the original performance of the methacrylic-based resin, i.e., excellent transparency, excellent processability, and excellent mechanical properties. The upper limit value of the content of the (meth)acrylic acid ester unit (A1) contained in the copolymer (A) is not particularly limited, but is preferably 99.999 mol%, more preferably 99.9 mol%, still more preferably 99.5 mol%, particularly preferably 99.0 mol%, especially preferably 98.999 mol%, from the viewpoint that the resulting resin molded body has excellent heat resistance.

The preferable upper limit values and preferable lower limit values described above can be optionally combined.

Examples of the (meth)acrylic acid ester unit (A1) include repeating units derived from (meth)acrylate compounds such as methyl (meth)acrylate, ethyl (meth)acrylate, n-propyl (meth)acrylate, iso-propyl (meth)acrylate, n-butyl (meth)acrylate, iso-butyl (meth)acrylate, secbutyl (meth)acrylate, tert-butyl (meth)acrylate, n-hexyl (meth)acrylate, cyclohexyl (meth)acrylate, n-octyl (meth)acrylate, 2-ethylhexyl (meth)acrylate, isobornyl (meth)acrylate, glycidyl (meth)acrylate, tetrahydrofurfuryl (meth)acrylate, norbornyl (meth)acrylate, adamantyl (meth)acrylate, dicyclopentenyl (meth)acrylate, dicyclopentanyl (meth)acrylate, 2-hydroxyethyl (meth)acrylate, and 2-hydroxypropyl (meth)acrylate.

One of these units (A1) may be contained singly, or two or more thereof may be contained. From the viewpoint of improving the thermal stability of the resulting resin molded body, the (meth)acrylic acid ester unit (A1) is preferably a methyl methacrylate (methyl methacrylate) unit.

The (meth)acrylic acid unit (A2) contained in the copolymer (A) of the present invention is a repeating unit derived from acrylic acid and/or methacrylic acid. One of these units (A2) may be contained singly, or two thereof may be contained.

The (meth)acrylic acid unit is preferably a methacrylic acid unit because the resulting resin molded body has excellent color tone and heat resistance.

The lower limit value of the content of the (meth)acrylic acid unit (A2) in the copolymer (A) is preferably 0.5 mol%, more preferably 1.0 mol%, still more preferably 2.0 mol%, relative to the total number of moles of the repeating units contained in the copolymer (A), from the viewpoint that the resulting resin molded body has excellent color tone, heat resistance, and mechanical properties. The upper limit value of the content of the (meth)acrylic acid unit (A2) in the copolymer (A) is preferably 20.0 mol%, more preferably 15.0 mol%, still more preferably 7.0 mol%, particularly preferably 3.5 mol%, from the viewpoint of not impairing the original performance of the methacrylic-based resin, i.e., excellent transparency and weather resistance of the resulting resin molded body.

The preferable upper limit values and preferable lower limit values described above can be optionally combined.

Further, the copolymer (A) of the present invention may contain a unit of a ring structure (A3) (hereinafter abbreviated as "ring structural unit (A3)" or "unit (A3)") in the main chain. It is presumed that when the copolymer (A) of the present invention contains the ring structural unit (A3), the ring structure partially functions to fix the carbon-carbon bond of the main chain and disturbs the rotational motion of the polymer chain, and thus, the resulting resin molded body further improves the heat resistance.

Examples of the ring structure include at least one selected from glutaric anhydride, maleic anhydride, glutarimide, a lactone ring, and N-substituted maleimide. Among these, glutaric anhydride is preferably contained from the viewpoint of having an excellent color tone.

The lower limit value of the content of the ring structural unit (A3) in the copolymer (A) of the present invention is not particularly limited, but is preferably 0.001 mol%, more preferably 0.01 mol%, still more preferably 0.05 mol%, relative to the total number of moles of the repeating units contained in the copolymer (A), from the viewpoint that the resulting resin molded body has excellent heat resistance. The upper limit value of the content of the ring structural unit (A3) in the copolymer (A) is not particularly limited, but is preferably 10.0 mol% from the viewpoint that the resulting resin molded body has excellent heat resistance, and is more preferably 5.0 mol%, still more preferably 3.0 mol%, particularly preferably 0.3 mol% from the viewpoint of achieving excellent coloring suppression, molding appearance, and weather resistance.

The preferable upper limit values and preferable lower limit values described above can be optionally combined.

The ring structural unit (A3) may be a unit corresponding to glutaric anhydride structural unit formed through a cyclization reaction between a methoxycarbonyl group derived from the (meth)acrylic acid ester unit (A1) and a carboxyl group derived from the (meth)acrylic acid unit (A2) adjacent to the (meth)acrylic acid ester unit (A1) in the copolymer produced by copolymerizing a (meth)acrylic acid ester and (meth)acrylic acid.

This cyclization reaction can be advanced by kneading the copolymer while heating the copolymer using an extruder or the like as in Examples described below.

In the present specification, the content of each unit in the copolymer (A) containing the unit (A1) and the unit (A2) or containing the unit (A1), the unit (A2), and the unit (A3) is a value calculated from ¹H-NMR measurement. Specifically, the method disclosed in WO 2019/013186 can be used.

The method for producing the copolymer (A) is not particularly limited, and examples thereof include a bulk polymerization method, a suspension polymerization method, an emulsion polymerization method, and a solution polymerization method. Among these polymerization methods, a bulk polymerization method and a suspension polymerization method are preferable from the viewpoint of excellent productivity. Specifically, the production methods disclosed in WO 2017-022393 and WO 2019/013186 can be used.

The mass average molecular weight of the copolymer (A) of the present invention is not particularly limited, but it may be preferably 50000 or more and 150000 or less, and more preferably 70000 or more and 130000 or less. When the mass average molecular weight of the copolymer (A) is 50000 or more, the resulting resin molded body has excellent mechanical properties. When the mass average molecular weight of the copolymer (A) is 150000 or less, excellent fluidity at the time of molding is achieved.

To control the mass average molecular weight of the copolymer (A), it is preferable to adjust the amount of the chain transfer agent in the polymerization of the raw material monomer mixture.

### Fatty Acid Metal Salt

The metal species of the fatty acid metal salt contained in the resin composition of the present invention is preferably a monovalent to trivalent metal, particularly preferably a monovalent or divalent metal, particularly preferably a monovalent metal, from the viewpoint of ease of availability.

Specific examples of the metal of the fatty acid metal salt include Li, Na, Mg, Ca, Al, Ba, K, and Zn. Among these, Li, Na, Mg, Ca, Al, Ba, and K are preferable since they have high compatibility with the copolymer (A) of the present invention, and cloudiness hardly occurs in the resulting resin molded body, and particularly Ca or Mg is preferable from the viewpoint of the effect of improving the releasability of the resulting resin molded body.

The fatty acid constituting the fatty acid metal salt used in the present invention is preferably a saturated fatty acid having from 8 to 22 carbons and/or an unsaturated fatty acid having from 8 to 22 carbons from the viewpoint of compatibility with the copolymer (A) of the present invention. Specific examples of the saturated fatty acid having from 8 to 22 carbons and the unsaturated fatty acid having from 8 to 22 carbons include those exemplified as the fatty acid contained in the resin composition of the present invention described below.

As the fatty acid constituting the fatty acid metal salt, a saturated fatty acid having from 8 to 22 carbons is preferable from the viewpoint of weather resistance. Palmitic acid, stearic acid, myristic acid, lauric acid, or montanic acid is particularly preferable from the viewpoint of easy availability, and stearic acid is most preferable.

As the fatty acid metal salt, calcium stearate and magnesium stearate are preferable, and magnesium stearate is most preferable from the viewpoint of improving the appearance and releasability of the resulting resin molded body.

One of these fatty acid metal salts may be used singly, or two or more thereof may be used in combination.

The lower limit value and the upper limit value of the content of the fatty acid metal salt in the resin composition of the present invention are not particularly limited, but are preferably 0.01 parts by mass or more and 0.5 parts by mass or less per 100 parts by mass of the copolymer (A).

When the content of the fatty acid metal salt is equal to or more than the lower limit, the releasability improving effect can be sufficiently achieved. The lower limit value is more preferably 0.03 parts by mass or more, still more preferably 0.04 parts by mass or more, most preferably 0.07 parts by mass or more.

When the content of the fatty acid metal salt is equal to or less than the upper limit, contamination of the mold or the resin molded body due to excessive fatty acid metal salt remaining on the surface of the mold at the time of mold release hardly occurs. This upper limit value is more preferably 0.3 parts by mass or less, still more preferably 0.2 parts by mass or less, most preferably 0.15 parts by mass or less.

The upper limit values and the lower limit values can be optionally combined. That is, the content of the fatty acid metal salt is preferably from 0.01 parts by mass to 0.5 parts by mass, more preferably from 0.03 parts by mass to 0.3 parts by mass, still more preferably from 0.04 parts by mass to 0.2 parts by mass, most preferably from 0.07 parts by mass to 0.15 parts by mass.

### Fatty Acid

The resin composition of the present invention may further contain a fatty acid. It is presumed that when a fatty acid is contained, not only the carboxylic acid group in the repeating unit (A2) derived from (meth)acrylic acid, but also the presence of the carboxylic acid group in the fatty acid causes an interaction with the fatty acid metal salt, and thus, a reaction with contained substances or a decomposition product of the fatty acid metal salt, the ultraviolet absorber, other additives, or the like is suppressed, and coloring hardly occurs. Thus, it is considered that even when a fatty acid metal salt and an ultraviolet absorber are contained, the resulting resin composition and the resin molded body produced by molding the resin composition exhibit a more excellent color tone.

The fatty acid used in this case is preferably a saturated fatty acid having from 8 to 22 carbons and/or an unsaturated fatty acid having from 8 to 22 carbons from the viewpoint of maintaining compatibility with the copolymer (A) of the present invention and excellent transparency.

Examples of the saturated fatty acid having from 8 to 22 carbons include caprylic acid (8 carbons), pelargonic acid (9 carbons), capric acid (10 carbons), lauric acid (12 carbons), myristic acid (14 carbons), pentadecylic acid (15 carbons), palmitic acid (16 carbons), margaric acid (17 carbons), stearic acid (18 carbons), arachidic acid (20 carbons), henicosylic acid (21 carbons), and behenic acid (22 carbons).

Examples of the unsaturated fatty acid having from 8 to 22 carbons include myristoleic acid (14 carbons), palmitoleic acid (16 carbons), sapienic acid (16 carbons), oleic acid (18 carbons), elaidic acid (18 carbons), vaccenic acid (18 carbons), gadoleic acid (20 carbons), eicosenoic acid (20 carbons), erucic acid (22 carbons), linoleic acid (18 carbons), eicosadienoic acid (20 carbons), docosadienoic acid (22 carbons), α-linolenic acid (18 carbons), γ-linolenic acid (18 carbons), pinolenic acid (18 carbons), α-eleostearic acid (18 carbons), β-eleostearic acid (18 carbons), mead acid (20 carbons), dihomo-γ-linolenic acid (20 carbons), eicosatrienoic acid (20 carbons), stearidonic acid (18 carbons), arachidonic acid (20 carbons), eicosatetraenoic acid (20 carbons), adrenic acid (22 carbons), boseopentaenoic acid (18 carbons), eicosapentaenoic acid (20 carbons), osbond acid (22 carbons), sardine acid (22 carbons), and docosahexaenoic acid (22 carbons).

One of these fatty acids may be used singly, or two or more thereof may be used in combination.

Among the fatty acids, a saturated fatty acid having from 8 to 22 carbons is preferable from the viewpoint of weather resistance, palmitic acid, stearic acid, myristic acid, lauric acid, or montanic acid is particularly preferable from the viewpoint of resistance to contamination of the mold at the time of molding, and palmitic acid is most preferable.

The lower limit value and the upper limit value of the content of the fatty acid in the resin composition of the present invention are not particularly limited, but are preferably 0.01 parts by mass or more and 1.0 part by mass or less per 100 parts by mass of the copolymer (A).

When the content of the fatty acid is equal to or more than the lower limit, the releasability improving effect can be sufficiently achieved through combination use with a fatty acid metal salt. The lower limit value is more preferably 0.03 parts by mass or more, still more preferably 0.05 parts by mass or more, particularly preferably 0.1 parts by mass or more, most preferably 0.15 parts by mass or more.

When the content of the fatty acid is equal to or less than the upper limit, the mold is less likely to be contaminated at the time of molding. This upper limit value is more preferably 0.7 parts by mass or less, still more preferably 0.5 parts by mass or less, particularly preferably 0.4 parts by mass or less, most preferably 0.3 parts by mass or less.

The upper limit values and the lower limit values can be optionally combined. That is, the content of the fatty acid is preferably from 0.01 parts by mass to 1.0 part by mass, more preferably from 0.03 parts by mass to 0.7 parts by mass, still more preferably from 0.05 parts by mass to 0.5 parts by mass, particularly preferably from 0.1 parts by mass to 0.4 parts by mass, most preferably from 0.15 parts by mass to 0.3 parts by mass.

### Benzotriazole-Based Ultraviolet Absorber

The resin composition of the present invention further contains a benzotriazole-based ultraviolet absorber.

The benzotriazole-based ultraviolet absorber is not particularly limited, and a benzotriazole-based ultraviolet absorber known in the related art can be used.

Examples of the benzotriazole-based ultraviolet absorber include 2-(2'-hydroxy-5'-methylphenyl)benzotriazole, 2-[2-hydroxy-3,5-bis(α,α-dimethylbenzyl)phenyl]-2H-benzotriazole, 2-(2'-hydroxy-3'-t-butyl-5'-methylphenyl)-5-chlorobenzotriazole, 2-(2H-benzotriazol-2-yl)-4-methylphenol, 6-di-t-pentylphenol, 2-(2'-hydroxy-5'-t-octylphenyl)benzotriazole, 2-(2-hydroxy-3,5-dicumylphenyl)benzotriazole, 2,2'-methylenebis[4-(1,1,3,3-tetramethylbutyl)-6-(2H-benzotriazol-2-yl)phenol], 2-(2-hydroxy-3,5-di-t-butylphenyl)benzotriazole, 2-(2-hydroxy-3,5-di-t-butylphenyl)-5-chlorobenzotriazole, 2-(2-hydroxy-3,5-di-t-amylphenyl)benzotriazole, 2-(2-hydroxy-5-t-butylphenyl)benzotriazole, 2-(2-hydroxy-4-octoxyphenyl)benzotriazole, 2,2'-methylenebis(4-cumyl-6-(2H-benzotriazol-2-yl)phenol, 2,2'-methylenebis[6-(2H-benzotriazol-2-yl)-4-(2-hydroxyethyl)phenol], and 2-[2-hydroxy-3-(4,5,6,7-tetrahydro-1,3-dioxo-1H-isoindol-2-ylmethyl)-5-methylphenyl]-2H-benzotriazole.

Among these, from the viewpoint of compatibility with the methacrylic-based resin, 2-(2'-hydroxy-5'-methylphenyl)benzotriazole, 2-[2-hydroxy-3,5-bis(α,α-dimethylbenzyl)phenyl]-2H-benzotriazole, 2-(2'-hydroxy-3'-t-butyl-5'-methylphenyl)-5-chlorobenzotriazole, 2-(2H-benzotriazol-2-yl)-4-methylphenol, 6-di-t-pentylphenol, or 2-(2'-hydroxy-5'-t-octylphenyl)benzotriazole is preferable, and 2-(2H-benzotriazol-2-yl)-4-methylphenol is particularly preferable.

One of these benzotriazole-based ultraviolet absorbers may be used singly, or two or more thereof may be used in combination.

As these benzotriazole-based ultraviolet absorbers, commercially available products can be used, and for example, Tinuvin (registered trademark) series available from BASF Japan Ltd. can be used.

The lower limit value and the upper limit value of the content of the benzotriazole-based ultraviolet absorber in the resin composition of the present invention are not particularly limited, but are preferably 0.001 parts by mass or more and 0.3 parts by mass or less per 100 parts by mass of the total mass of the resin composition of the present invention.

When the content of the benzotriazole-based ultraviolet absorber is equal to or more than the lower limit, the effect of improving weather resistance by containing the benzotriazole-based ultraviolet absorber can be sufficiently achieved.

The content of the benzotriazole-based ultraviolet absorber is more preferably 0.002 parts by mass or more, still more preferably 0.003 parts by mass or more, particularly preferably 0.005 parts by mass or more, most preferably 0.009 parts by mass or more.

When the content of the benzotriazole-based ultraviolet absorber is equal to or less than the upper limit, yellowing of the resin molded body due to the inclusion of the benzotriazole-based ultraviolet absorber can be reduced. The content of the benzotriazole-based ultraviolet absorber is more preferably 0.2 parts by mass or less, still more preferably 0.1 parts by mass or less, particularly preferably 0.08 parts by mass or less, most preferably 0.06 parts by mass or less.

The upper limit values and the lower limit values can be optionally combined. That is, the content of the benzotriazole-based ultraviolet absorber in the resin composition of the present invention is preferably from 0.001 parts by mass to 0.3 parts by mass, more preferably from 0.002 parts by mass to 0.2 parts by mass, still more preferably from 0.003 parts by mass to 0.1 parts by mass, particularly preferably from 0.005 parts by mass to 0.08 parts by mass, most preferably from 0.009 parts by mass to 0.06 parts by mass.

### Additional Additive

The resin composition of the present invention may contain, in addition to the copolymer (A), the fatty acid metal salt, the fatty acid, and the benzotriazole-based ultraviolet absorber described above, one or two or more of various additives usually added to the resin composition may be contained as long as the effect of the present invention is not impaired.

Examples of the additives include a light diffusing agent, an antioxidant, a colorant, a pigment, a dye, a heat stabilizer, a reinforcing agent, a filler, a flame retardant, a foaming agent, a lubricant, a plasticizer, an antistatic agent, a light stabilizer, an impact resistance improver, a fluidity improver, a release agent, a processing elasticity imparting agent, and an ultraviolet absorber other than a benzotriazole-based ultraviolet absorber.

### Method for Producing Resin Composition

As the method for producing the resin composition of the present invention, method (1) or method (2) described below is exemplified.
(1) A method of charging the copolymer (A) of the present invention, a fatty acid metal salt and a benzotriazole-based ultraviolet absorber, and a fatty acid and additional additives to be used as necessary into a single-screw extruder or a twin-screw extruder, and heating, melting, and kneading them to mix them.
(2) A method of mixing a fatty acid metal salt and a benzotriazole-based ultraviolet absorber, and a fatty acid and additional additives to be used as necessary with a monomer constituting the copolymer (A) of the present invention, followed by polymerization.

### Resin Molded Body

The resin molded body of the present invention is produced by molding the resin composition of the present invention.

The resin molded body of the present invention is not particularly limited as long as it is molded by a known molding method, for example, press molding, injection molding, gasassisted injection molding, welding molding, extrusion molding, blow molding, film molding, hollow molding, multilayer molding, melt spinning, or the like, but the resin composition of the present invention is suitable as a resin composition for injection molding from the viewpoint of achieving an effect of improving releasability and fluidity with a fatty acid metal salt.

Specific examples of the resin molded body of the present invention include components for vehicles, e.g., vehicle interior and exterior materials, such as a tail lamp cover, a headlamp cover, an inner lens, a meter panel, a pillar garnish, a front grille, and an emblem; components for optical applications, such as lens and light guide; building components; components for home installations, such as a wash basin, a bath tub, and a flush toilet bowl; containers for cosmetics and the like; and medical components such as cuvettes.

Among these, in particular, the resin molded body of the present invention is suitably used for components for vehicles, components for optical applications, containers, and medical components because of its excellent appearance, weather resistance, transparency, and chemical resistance, and is particularly suitable for components for vehicles and components for optical applications.

### Examples

Hereinafter, the present invention will be described more specifically with reference to Examples.

### Raw Materials Used

The abbreviations of the compounds used in the following Examples and Comparative Examples are as follows.
MMA: methyl methacrylate (trade name: Acryester (registered trademark) M, available from MITSUBISHI CHEMICAL CORPORATION)
MA: methyl acrylate (available from MITSUBISHI CHEMICAL CORPORATION)
MAA: methacrylic acid
Polymerization initiator (1): 2,2'-azobis(2-methylpropionamidine) dihydrochloride
Polymerization initiator (2): 2,2'-azobis-2-methylbutyronitrile (trade name: V-59, available from Wako Pure Chemical Industries, Ltd.)
Chain transfer agent (1): n-octyl mercaptan (available from Tokyo Chemical Industry Co., Ltd.)
Copolymer (1): methacrylic-based resin produced in Production Example 1
Copolymer (2): methacrylic-based resin produced in Production Example 2
Fatty acid metal salt (1): lithium stearate (trade name: LI-ST, available from Nitto Kasei Co., Ltd.) (in Table 1, described as "Li stearate")
Fatty acid metal salt (2): sodium stearate (trade name: NA-ST, available from Nitto Kasei Co., Ltd.) (in Table 1, described as "Na stearate")
Fatty acid metal salt (3): magnesium stearate (trade name: Mg-St, available from Nitto Kasei Co., Ltd.) (in Table 1, described as "Mg stearate")
Fatty acid metal salt (4): calcium stearate (trade name: Ca-St, available from Nitto Kasei Co., Ltd.) (in Table 1, described as "Ca stearate")
Benzotriazole-based ultraviolet absorber: 2-(2H-benzotriazol-2-yl)-4-methylphenol (Tinuvin (registered trademark)-P, available from BASF Japan Ltd.)

### Evaluation Method

### Content of each unit in methacrylic-based resin

Each of the methacrylic-based polymers produced in Production Examples and deuterated dimethyl sulfoxide were supplied to a 20 mL Schlenk tube containing a stirring bar, and heated to 80°C with stirring to dissolve the methacrylic-based resin. Thereafter, the mixture was cooled to 23°C, and benzylamine was supplied to the Schlenk tube and heated to 80°C with stirring. After reaction was allowed to proceed for 1 hour, the reaction solution was taken out, and ¹H-NMR measurement was performed using a nuclear magnetic resonance apparatus (available from Varian Medical Systems, Inc., 270 MHz) under the following conditions: a measurement temperature of 80°C and the number of integrations of 32 times.

Based on the obtained ¹H-NMR measurement results, the content of the unit (A3) in the methacrylic-based resin was calculated from the ratio between the integrated value of the singlet peak present in the vicinity of 3.7 ppm attributed to the benzyl proton of unreacted benzylamine and the integrated value of the singlet peak present in the vicinity of 4.2 ppm attributed to the benzyl proton of benzylamide glutarate. The contents of the unit (A1) and the unit (A2) in the methacrylic-based resin were calculated by taking the ratio of each of the integral value of the proton derived from the unit (A1) of the singlet peak present in the vicinity of 3.5 ppm and the integral value of the proton derived from the unit (A1) and the unit (A2) present in the vicinity of 0.5 ppm or more and 2.5 ppm or less to the integral value of the benzyl proton of unreacted benzylamine of the singlet peak present in the vicinity of 3.7 ppm.

### Color tone of resin molded body after injection molding

### (1) Production of test piece

Pellet-form methacrylic-based resin compositions produced in Examples and Comparative Examples were hot-air dried at 80°C for about 16 hours, and then injection-molded under the following conditions to produce test pieces for color tone evaluation.
· Injection molding apparatus: model name: EC75-SXII, available from SHIBAURA MACHINE CO., LTD.
· Mold: 200 mm × 30 mm × 4 mm plate-molded body
· Cylinder temperature: 250°C
· Mold temperature: 60°C

### (2) Color tone evaluation

With regard to the resin molded body test piece, a yellow index (YI) value at an optical path length of 200 mm was measured by a C light source transmission method in accordance with JIS K7105 with a transmission method using a spectrophotometer "U-4100" available from Hitachi High-Technologies Corporation, and the value was used as an index for evaluation of yellowing degree. The transmittance at a wavelength of 700 nm was calculated from the spectral light transmittance obtained at the time of YI measurement, and used as an index for evaluation of cloudiness.

The measurement was performed on three test pieces, and the average value thereof was calculated and evaluated according to the following criteria. The results are shown in Table 1.
○: The YI value is less than 26, and the transmittance at a wavelength of 700 nm is more than 80%.
×: The YI value is 26 or more, or the transmittance at a wavelength of 700 nm is 80% or less.

### Production Example 1

900 parts by mass of deionized water, 60 parts by mass of sodium 2-sulfoethyl methacrylate, 10 parts by mass of potassium methacrylate, and 12 parts by mass of MMA were added to a nitrogen-purged reaction container equipped with a reflux condenser, and then the liquid temperature in the reaction container was raised to 50°C with stirring.

Thereafter, 0.08 parts by mass of the polymerization initiator (1) was added, and the liquid temperature in the reaction container was raised to 60°C with stirring, and then MMA was continuously added dropwise at a rate of 0.24 parts by mass/min over 75 minutes using a dropping pump. Thereafter, polymerization was performed by further holding for 6 hours to yield a dispersant (solid content: 10 mass%).

2000 parts by mass of deionized water and 4.2 parts by mass of sodium sulfate were added to a reaction container equipped with a reflux condenser having a nitrogen gas-introducing tube, and then the mixture was stirred at a stirring speed of 320 rpm for 15 minutes. Thereafter, a mixed solution of 1351.6 parts by mass of MMA, 36.3 parts by mass of MAA, 12.1 parts by mass of MA, 2.8 parts by mass of the polymerization initiator (2), and 4.2 parts by mass of the chain transfer agent (1) was added to the reaction container, and stirred for 5 minutes. Subsequently, 6.72 parts by mass of the dispersant (solid content: 10 mass%) was added to the reaction container, and then the mixture was stirred to disperse the monomer composition in the reaction container in water. Thereafter, the inside of the reaction container was purged with nitrogen.

Subsequently, the liquid temperature in the reaction container was raised to 75°C, and then the liquid temperature in the reaction container was further continuously measured and kept at 75°C until an exothermic peak of polymerization was observed. After an exothermic peak of polymerization was observed, the liquid temperature in the reaction container was raised to 90°C, and then the temperature was maintained for 60 minutes to perform polymerization. Thereafter, the mixture in the reaction container was filtered, and the filtered product was washed with deionized water and dried at 80°C for 16 hours to yield a bead-like copolymer. The copolymer was used as a polymer precursor (1) of a methacrylic-based resin.

The composition of the polymer precursor (1) was analyzed in accordance with the method for measuring the "Content of each unit in methacrylic-based resin" described above, and it was found that the repeating unit derived from methyl methacrylate (hereinafter, referred to as "MMA unit") was 96.0 mol%, the repeating unit derived from methacrylic acid (hereinafter, referred to as "MAA unit") was 3.0 mol%, and the repeating unit derived from methyl acrylate (hereinafter, referred to as "MA unit") was 1.0 mol%.

The polymer precursor (1) was supplied to a twin-screw extruder (model name: "TEM18SS", available from SHIBAURA MACHINE CO., LTD.) and kneaded at 250°C to produce a pellet-form methacrylic-based resin. This resin was used as a copolymer (1).

The composition of the obtained copolymer (1) was as follows: 97.2 mol% of a methyl (meth)acrylate unit, 2.7 mol% of a (meth)acrylic acid unit, and 0.1 mol% of a glutaric anhydride unit. The methyl (meth)acrylate unit refers to a repeating unit including an MMA unit and an MA unit.

In Production Example 1, a glutaric anhydride unit was produced through a cyclization reaction between a methoxycarbonyl group of the MMA unit and MA unit and a carboxyl group of the MAA unit by heating and kneading in the twin-screw extruder.

### Production Example 2

A copolymer (2) containing no MAA unit was produced by performing the same operation as in Production Example 1 except that MAA was not used as a monomer. The composition of the produced copolymer (1) was 100 mol% of a methyl (meth)acrylate unit.

### Example 1

A pellet-form resin composition was produced by supplying 100 parts by mass of the copolymer (1), 0.01 parts by mass of lithium stearate as a fatty acid metal salt, and 0.05 parts by mass of Tinuvin-P as an ultraviolet absorber to a twin-screw extruder (model name "TEM18SS", available from SHIBAURA MACHINE CO., LTD.) and melt-kneading them at a cylinder temperature of the extruder of 250°C. The evaluation results of the produced resin composition are shown in Table 1.

### Examples 2 to 8

Pellet-form resin compositions were produced by performing the same operation as in Example 1 except that the type and addition amount of the fatty acid metal salt were changed. The evaluation results of the produced resin compositions are shown in Table 1.

### Comparative Examples 1 to 7

Pellet-form resin compositions were produced by performing the same operation as in Examples 1 to 8 except that the copolymer (2) was used in place of the copolymer (1). The evaluation results of the produced resin compositions are shown in Table 1.

### Reference Example 1

A pellet-form resin composition was produced by performing the same operation as in Example 1 except that a fatty acid metal salt was not added. The evaluation results of the produced resin composition are shown in Table 1.

### Reference Example 2

A pellet-form resin composition was produced by performing the same operation as in Comparative Example 1 except that a fatty acid metal salt was not added. The evaluation results of the produced resin composition are shown in Table 1.

**[Table 1]**

| | Copolymer | | Fatty acid metal salt | | Color tone of resin molded body | | |
|---|---|---|---|---|---|---|---|
| | | | | | Yellowness Cloudiness | | Evaluation |
| | Type | Parts by mass | Type | Additional amount (parts by mass) | 200 mm YI | Transmittance at 700 nm (%) | |
| Example 1 | (1) | 100 | Li stearate | 0.01 | 9 | 88 | ○ |
| Example 2 | (1) | 100 | Li stearate | 0.1 | 12 | 85 | ○ |
| Example 3 | (1) | 100 | Li stearate | 0.5 | 22 | 86 | ○ |
| Example 4 | (1) | 100 | Na stearate | 0.1 | 10 | 88 | ○ |
| Example 5 | (1) | 100 | Mg stearate | 0.01 | 8 | 88 | ○ |
| Example 6 | (1) | 100 | Mg stearate | 0.1 | 14 | 88 | ○ |
| Example 7 | (1) | 100 | Mg stearate | 0.5 | 25 | 86 | ○ |
| Example 8 | (1) | 100 | Ca stearate | 0.1 | 12 | 88 | ○ |
| Comparative Example 1 | (2) | 100 | Li stearate | 0.01 | 63 | 89 | × |
| Comparative Example 2 | (2) | 100 | Li stearate | 0.1 | 91 | 80 | × |
| Comparative Example 3 | (2) | 100 | Li stearate | 0.5 | 109 | 56 | × |
| Comparative Example 4 | (2) | 100 | Na stearate | 0.1 | 57 | 77 | × |
| Comparative Example 5 | (2) | 100 | Mg stearate | 0.1 | 58 | 57 | × |
| Comparative Example 6 | (2) | 100 | Mg stearate | 0.5 | 70 | 12 | × |
| Comparative Example 7 | (2) | 100 | Ca stearate | 0.1 | 37 | 74 | × |
| Reference Example 1 | (1) | 100 | - | - | 10 | 88 | ○ |
| Reference Example 2 | (2) | 100 | - | - | 6 | 91 | ○ |

As is clear from Table 1, according to the resin compositions of the present invention in which a fatty acid metal salt and a benzotriazole-based ultraviolet absorber are added to the copolymer (1) containing a (meth)acrylic acid unit (A2) as shown in Examples 1 to 8, yellowing and cloudiness caused by the fatty acid metal salt are suppressed, and a resin molded body having excellent color tone and transparency can be produced.

In contrast, in Comparative Examples 1 to 7 in which the copolymer (2) containing no (meth)acrylic acid unit (A2) is used instead of the copolymer (1), yellowing and cloudiness caused by the fatty acid metal salt occur, and it is found that the color tone and transparency of the resin molded body are impaired.

From Reference Examples 1 and 2, it is found that when neither the copolymer (1) nor the copolymer (2) contains a fatty acid metal salt, the color tone and transparency are excellent, and the cause of yellowing and cloudiness is a fatty acid metal salt.

From the above, it was found that according to the present invention, when the copolymer (A) in the resin composition has the (meth)acrylic acid unit (A2), yellowing and cloudiness caused by a fatty acid metal salt can be suppressed, and excellent color tone and transparency can be achieved even when a fatty acid metal salt and a benzotriazole-based ultraviolet absorber are added.

Although the present invention has been described in detail with reference to specific embodiments, it will be apparent to those skilled in the art that various modifications can be made without departing from the spirit and scope of the present invention.

The present application is based on JP 2023-136439 filed on August 24, 2023, which is incorporated herein by reference in its entirety.

## Claims

1. A resin composition comprising:
a copolymer (A) containing a repeating unit (A1) derived from a (meth)acrylic acid ester and a repeating unit (A2) derived from (meth)acrylic acid;
a fatty acid metal salt; and
a benzotriazole-based ultraviolet absorber.

2. The resin composition according to claim 1, wherein in all repeating units constituting the copolymer (A), the repeating unit (A1) derived from a (meth)acrylic acid ester is contained in an amount of from 80.0 mol% to 99.0 mol%, and the repeating unit (A2) derived from (meth)acrylic acid is contained in an amount of from 1.0 mol% to 20.0 mol%.

3. The resin composition according to claim 1, wherein the copolymer (A) further contains a unit (A3) having a ring structure in a main chain.

4. The resin composition according to claim 3, wherein the ring structure contains at least one selected from glutaric anhydride, maleic anhydride, glutarimide, a lactone ring, and N-substituted maleimide.

5. The resin composition according to claim 4, wherein the ring structure contains glutaric anhydride.

6. The resin composition according to claim 3, wherein in all repeating units constituting the copolymer (A), the repeating unit (A1) derived from a (meth)acrylic acid ester is contained in an amount of from 80.0 mol% to 98.999 mol%, the repeating unit (A2) derived from (meth)acrylic acid is contained in an amount of from 1.0 mol% to 15.0 mol%, and the structural unit (A3) derived from a ring structure is contained in an amount of from 0.001 mol% to 5.0 mol%.

7. The resin composition according to claim 1, wherein a metal of the fatty acid metal salt is a monovalent to trivalent metal.

8. The resin composition according to claim 7, wherein the metal of the fatty acid metal salt is one or two or more selected from the group consisting of Li, Na, Mg, Ca, Ba, K, and Al.

9. The resin composition according to claim 8, wherein the metal of the fatty acid metal salt is Ca or Mg.

10. The resin composition according to claim 1, wherein a fatty acid of the fatty acid metal salt is one or two or more selected from the group consisting of a saturated fatty acid having from 8 to 22 carbons and an unsaturated fatty acid having from 8 to 22 carbons.

11. The resin composition according to claim 1, further comprising a fatty acid.

12. The resin composition according to claim 11, wherein the fatty acid is one or two or more selected from the group consisting of a saturated fatty acid having from 8 to 22 carbons and an unsaturated fatty acid having from 8 to 22 carbons.

13. The resin composition according to claim 12, wherein the fatty acid is one or two or more selected from the group consisting of palmitic acid, stearic acid, myristic acid, lauric acid, and montanic acid.

14. The resin composition according to claim 13, wherein the fatty acid is palmitic acid.

15. The resin composition according to claim 1, wherein a content of the fatty acid metal salt is from 0.01 parts by mass to 0.5 parts by mass per 100 parts by mass of the copolymer (A).

16. The resin composition according to claim 11, wherein a content of the fatty acid contained in the resin composition is from 0.01 parts by mass to 1.0 part by mass per 100 parts by mass of the copolymer (A).

17. The resin composition according to claim 1, wherein the benzotriazole-based ultraviolet absorber is one or two or more selected from the group consisting of 2-(2'-hydroxy-5'-methylphenyl)benzotriazole, 2-[2-hydroxy-3,5-bis(α,α-dimethylbenzyl)phenyl]-2H-benzotriazole, 2-(2'-hydroxy-3'-t-butyl-5'-methylphenyl)-5-chlorobenzotriazole, 2-(2H-benzotriazol-2-yl)-4-methylphenol, 6-di-t-pentylphenol, and 2-(2'-hydroxy-5'-t-octylphenyl)benzotriazole.

18. The resin composition according to claim 17, wherein the benzotriazole-based ultraviolet absorber is 2-(2H-benzotriazol-2-yl)-4-methylphenol.

19. The resin composition according to claim 1, wherein a content of the benzotriazole-based ultraviolet absorber is from 0.001 parts by mass to 0.3 parts by mass per 100 parts by mass of a total mass of the resin composition.

20. A resin molded body produced by molding the resin composition described in any one of claims 1 to 19.

21. A component for an optical application, the component being produced by molding the resin composition described in any one of claims 1 to 19.

22. A component for a vehicle, the component being produced by molding the resin composition described in any one of claims 1 to 19.
